# EUROPEAN PATENT APPLICATION

(11) **EP 0 983 892 A1**
(43) Date of publication of application: **08.03.2000**
(21) Application number: 99306876.6
(22) Date of filing: 27.08.1999
(51) Int. Cl.: B60K 17/28

(54) **A driveline compressor**

(30) Priority: 03.09.1998 GB 9819271
(71) Applicant: Compair Holman Limited, Cornwall TR14 8DS (GB)
(72) Inventor: Doble, Paul, Redruth, Cornwall TR15 3TA (GB); Pryor, John, Camborne, Cornwall TR14 0NL (GB)
(74) Representative: Rackham, Stephen Neil

(57) **Abstract**

A driveline compressor (10) for fitting to a vehicle to provide a portable source of compressed air comprising:
a housing, an input driveshaft (11) mounted in the housing having one end arranged to be coupled to the engine of the vehicle, an output driveshaft (12) mounted in the housing having one end arranged to be coupled to the driven wheels of the vehicle, the output driveshaft (12) being coaxial with the input driveshaft (11), an air compressor mounted in the housing and a clutch (15) for selectively coupling the other end of input driveshaft (11) either to the other end of the output driveshaft (12) or to the compressor.

This single unit creates a simple and light system which is easy to fit. It can be fitted to existing vehicles by moderately skilled mechanics in a substantially shorter time than existing packages and without the need for the vehicle to be sent to a specialist fitter. The reduction in the numbers of components means that the system is more easily assembled and fitted, has lower production costs and a greater operational reliability. The single unit allows a single type of lubrication to be used further reducing the cost and complexity.

## Description

It is known that it is useful for the construction industry to have a portable source of electrical power and compressed air for use on site which have no ready source of power. The electrical power is needed for many basic power tools and the compressed air is used essentially in pneumatic tools, such as drills and hammers. Conventionally this portable power source has been provided by an air compressor and generator mounted on a trailer to be pulled behind a vehicle. This has several disadvantages in that a trailer can be stolen, a trailer is very difficult and cumbersome to manoeuvre, especially in reverse and as the working areas are often limited in size, the vehicle and trailer take up considerable amounts of space.

This problem has been recently overcome by mounting the compressor and generator on board the vehicle, usually beneath the chassis, and connecting them in series with the vehicle's drive system. In order to accomplish this, a power take off (PTO) unit has to be fitted to the driveshaft of the vehicle and then the required components, such as an air compressor are fitted to the vehicle and driven from the PTO unit. Any device such as an air compressor that provides an air supply is known as an airend. However fitting the PTO and other additional components is a time consuming job, taking typically 4 man days to complete, and one which has to be carried out by specialist fitters. This means that the vehicle has to be sent away to the suppliers of the PTO or the airend and is therefore be out of action for several days. This leads to lost revenue while the vehicle is out of service.

According to the present invention, a driveline compressor for fitting to a vehicle comprises: a housing; an input driveshaft mounted in the housing having one end arranged to be coupled to the engine of the vehicle; an output driveshaft mounted in the housing having one end arranged to be coupled to the driven wheels of the vehicle, the output driveshaft being co-axial with the input driveshaft; an air compressor mounted in the housing; and a clutch for selectively coupling the other end of input driveshaft either to the other end of the output driveshaft or to the compressor.

The single unit creates a simpler and lighter system which is easier to fit. The present invention can be fitted to existing vehicles by moderately skilled mechanics in a substantially shorter time and without the need for the vehicle to be sent to a specialist fitter. The reduction in the numbers of components means that the system is more easily assembled and fitted, has lower production costs and a greater operational reliability. The single unit allows a single type of lubrication to be used further reducing the cost and complexity.

Preferably the clutch comprises: a substantially cylindrical, internally splined collar which is radially spaced from and located co-axially around the input and output driveshafts; one or more transmission drive members rotatably and co-axially mounted on the other end of either the input or the output driveshaft; a number of sets of radially projecting teeth, one set on the other end of the input driveshaft, one set on the other end of the output driveshaft and one set on the or each transmission drive member, which mesh with the splines on the inside of the collar, and the collar is arranged to be axially movable and it selectively engages the teeth on the input driveshaft with either the teeth on the output driveshaft or one or each of the sets of teeth on the transmission drive members in order to drive the corresponding output drive member.

One of the transmission drive members located around the input driveshaft connects to a corresponding drive member on the compressor and another of the drive members connects to an auxiliary output driveshaft to power an optional extra component. Preferably the transmission means is by sprockets which are connected by a chain drive. Other means could include the use of bevelled gears, V-belts or gear transmission. A bevelled gear arrangement would allow the compressor and/or the auxiliary output driveshaft to be positioned perpendicular to the input and output driveshafts if this was advantageous in terms of available space or in the position of the power outlets.

A generator may be fitted to the auxiliary output from the driveline compressor and would also be driven by the input through the clutch, either in tandem with or independently of the compressor. Further, a second generator may be fitted to an output from the compressor to provide either extra power capacity or a second power source of a different voltage. The auxiliary output from the PTO and/or the output from the compressor may be used to drive a water/oil pump.

The splines on the inside of the collar may be provided with one or more gaps so that when a gap is placed around a set of the radially projecting teeth, the splines cannot mesh with the teeth and therefore the transmission drive member is not forced to rotate. In this way, the clutch can selectively engage with one or more of the outputs depending on the desired application.

The internally splined collar may be mounted on a selector fork which is, in turn, mounted on a selector rod. Springs are provided between the body of the selector fork and respective arms of an engagement fork to allow relative movement. The engagement fork is connected to a leadscrew nut, which is mounted on a screw threaded shaft, via a connector arm which is pivotally attached to the engagement fork and to the leadscrew nut. The screw threaded shaft is preferably rotated by an electric motor. As the motor is rotated in one direction, it forces the leadscrew nut to move in one axial direction along the screw thread. This movement of the nut causes the engagement fork to be moved in a similar direction. This then causes one of the springs to be compressed so urging the selector rod to move in the one direction. The selector rod is held into one of a number of pre-selected positions by a spring-loaded detent engaging one of a number if spaced notches in the selector rod. When the force exerted by the compressed spring overcomes the resistance of the detent the selector rod moves axially. The electric motor rotates a set amount and the sensor checks the engagement of the detent. If this is the correct final position for the collar here it remains but, if not, the process is repeated to move the selector rod into its next axial position. The different positions of the collar relate to either the wheels or one or both of the compressor and auxiliary output being driven. Rotating the motor in the opposite direction moves the lead screw nut and collar in the opposite axial direction.

Thus the driveline compressor has been developed to have soft engagement. The motor drives the leadscrew a preset axial distance and the sensor detects whether the detent has fully engaged with the notches on the selector rod. If the detent has not fully engaged, the unit can be programmed to re-try the engagement procedure for a preset number of attempts. If the detent does not engage after the preset number of attempts, a solenoid is activated to move the chain by a small amount to allow the splined collar to be aligned.

The transmission drive means may be geared so that the optimum power transfer can be achieved for the application in which the driveline compressor will be utilised. This may be achieved, for example, through the selection of appropriate gears or through differently sized sprockets. If the gear ratio is too small, the power transfer is inefficient and if the gear ratio is too high, the increase in required torque may cause the engine to stall.

One example of the present invention will now be described with reference to the accompanying drawings, in which:
Fig. 1 is a cross sectional view of the driveline compressor.
Fig. 2 is an axial cross section of the lead screw and selector fork arrangement; and
Fig. 3 is a cross sectional view of the detent.

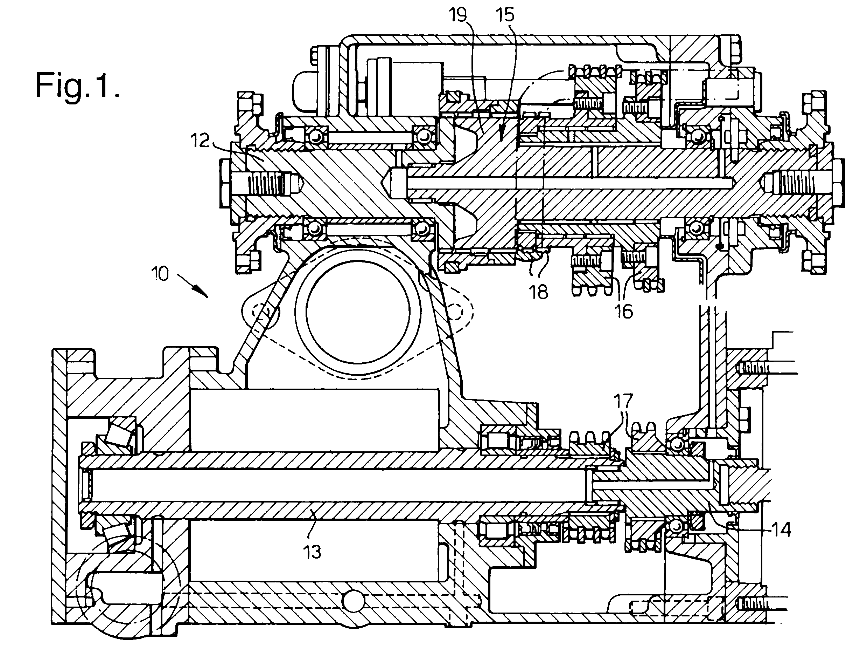

The driveline compressor 10, as shown in Fig. 1, has an input driveshaft 11 which is arranged to be connected to the engine of a vehicle. An output driveshaft 12, connected to the wheels of the vehicle, is arranged coaxially with the input driveshaft 11. A compressor driveshaft 13 and an auxiliary output shaft 14 are arranged coaxially with each other and parallel to the input 11 and output 12 driveshafts. A clutch 15 is slidably mounted on the input 11 and output 12 driveshafts to operate one or more of the three output driveshafts.

Sprockets 16 are provided on the input driveshaft 11 and the output driveshaft 12. The clutch 15 has an internally splined collar 19 which can engage with one or more of the sprockets 16. Radially projecting teeth 18 are provided on the input 11 and output 12 driveshafts and on each of the sprockets 16. These teeth 18 can selectively engage with the splines of the internally splined collar 19. Further sprockets 17 are provided on each of the compressor driveshaft 13 and the auxiliary output shaft 14. The sprockets 16 are connected to sprockets 17 by a duplex chain (not shown).

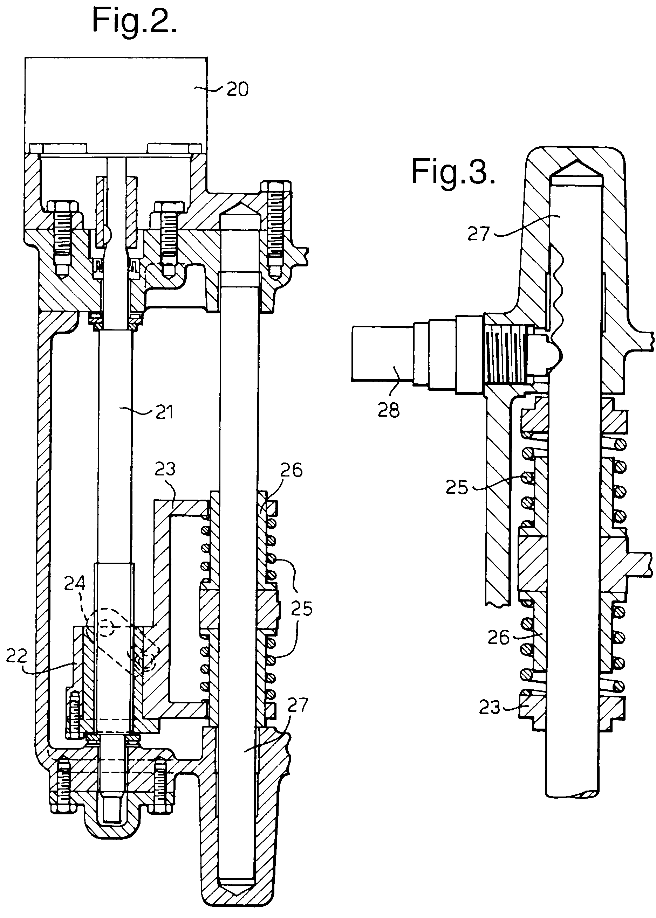

Figs. 2 and 3 show the mechanism by which the splined collar is moved. An electric motor 20 drives a lead screw 21 on which is mounted a leadscrew nut 22. As the lead screw is rotated, the leadscrew nut 22 is axially moved. This movement is transmitted to the engagement fork 23 through a connector arm 24 which is pivotally connected at each end. The movement of the engagement fork 23 compresses one of the springs 25 and hence exerts a force on the body of the selector fork 26, which is mounted on the selector rod 27. The selector rod 27 is axially move able but indexed into one of a number of axial portions by a detent 28 engaging one of a series of notches shown in Figure 3. The force from the compressed spring 25 urges the selector rod 27 to move axially and when this force overcomes the resistance impund by the detent the rod 27 moves. The electric motor 20 drives for a preset time or axial distance e.g. 2½ turns or 12mm and a sensor (not shown) detects whether the detent 28 is indexed into the next notch. As the selector fork 26 is attached to the internally splined collar 19, the collar 19 is axially moved along the input 11 and output 12 driveshafts to selectively engage with one or more sets of the radially projecting teeth 18.

After the internally splined collar 19 has moved to engage with the radially projecting teeth 18, one or more of the sprockets 16 are caused to rotate by rotation of the input driveshaft 11. Each of these sprockets 16 are connected to a corresponding sprocket 17 on either the compressor driveshaft 13 or the auxiliary output 14. Gaps are provided in the splines on the collar 19 such that the output driveshaft 12, the compressor driveshaft 13, the compressor driveshaft 13 and the auxiliary output 14 depending upon the axial pointer of the collar 15 or the auxiliary output 14 is driven.

## Claims

1. A driveline compressor (10) for fitting to a vehicle comprising:
a housing;
an input driveshaft (11) mounted in the housing having one end arranged to be coupled to the engine of the vehicle;
an output driveshaft (12) mounted in the housing having one end arranged to be coupled to the driven wheels of the vehicle, the output driveshaft (12) being co-axial with the input driveshaft (11);
an air compressor (13) mounted in the housing; and,
a clutch (15) for selectively coupling the other end of the input driveshaft (11) either to the other end of the output driveshaft (12) or to the compressor (13).

2. A driveline compressor (10) as claimed in claim 1, wherein the clutch (15) comprises:
a substantially cylindrical, internally splined collar (19) which is radially spaced from and located co-axially around the input and output driveshafts;
one or more transmission drive members rotatably and co-axially mounted on the other end of either the input or the output driveshaft;
a number of sets of radially projecting teeth (18), one set on the other end of the input driveshaft (11), one set on the other end of the output driveshaft (12) and one set on the or each transmission drive member, which mesh with the splines on the inside of the collar (19), wherein the collar is arranged to be axially movable and to selectively engage the teeth on the input driveshaft (11) with either the teeth on the output driveshaft (12) or with one or each of the sets of teeth on the transmission drive members in order to drive the corresponding output drive member.

3. A driveline compressor (10) as claimed in claim 2, wherein one of the transmission drive members located around the input driveshaft (11) connects to a corresponding drive member on the compressor (13) and another of the drive members connects to an auxiliary output driveshaft (14) to power an optional extra component.

4. A driveline compressor (10) as claimed in claim 2 or claim 3, wherein each of the transmission drive members have a plurality of sprockets (16,17) and are connected by a chain drive.

5. A driveline compressor (10) as claimed in claim 2 or claim 3, wherein the transmission drive members are connected by bevelled gears, V-belts or gear transmission.

6. A driveline compressor (10) as claimed in any one of the preceding claims, wherein a generator is fitted to the auxiliary output (14) from the driveline compressor (10) and is driven by the input driveshaft through the clutch (15), either in tandem with or independently of the compressor (13).

7. A driveline compressor (10) as claimed in any one of claims 2 to 6, wherein the splines on the inside of the collar (19) are provided with one or more cylindrical gaps so that when a gap is placed around a set of the radially projecting teeth (18), the splines do not mesh with the teeth and therefore the transmission drive member is not forced to rotate, thereby allowing the clutch (15) to selectively engage with one or more of the outputs depending on the desired application.

8. A driveline compressor (10) as claimed in any one of claims 2 to 7, wherein the internally splined collar (19) is mounted on a selector fork (26) which is mounted on a selector rod (27);
wherein springs (25) are provided between the body of the selector fork (26) and respective arms of an engagement fork (23) to allow relative movement; and,
wherein the engagement fork (23) is connected to a leadscrew nut (22), which is mounted on a screw threaded shaft via a connector arm (24) which is pivotally attached to the engagement fork and to the leadscrew nut.

9. A driveline compressor (10) as claimed in claim 8, wherein the screw threaded shaft is rotated by an electric motor (20).

10. A driveline compressor (10) as claimed in claim 8 or claim 9, wherein the selector rod (27) is held into one of a number of pre-selected positions by a spring-loaded detent (28) engaging one of a number of spaced notches in the selector rod.
